# EUROPEAN PATENT APPLICATION

(11) **EP 1 347 392 A1**
(43) Date of publication of application: **24.09.2003**
(21) Application number: 01958483.8
(22) Date of filing: 24.08.2001
(51) Int. Cl.: G06F 17/30

(54) **METHOD FOR DISTRIBUTING POSITION INFORMATION**

(30) Priority: 30.08.2000 JP 2000260635
(71) Applicant: Internet Number Corporation, Tokyo 160-0023 (JP)
(72) Inventor: NAKAJIMA, Hideyuki c/o Internet Number Corporation, Shinjuku-ku, Tokyo 160-0023 (JP)
(74) Representative: Rousset, Jean-Claude
(86) International application number: JP0107277
(87) International publication number: WO02019163

(57) **Abstract**

There is provided a method for distributing position information in which a user can acquire position information shared over the Internet without taking account of the environment or the terminal, the position information can arbitrarily reflect the latest information, and a utilizer can set arbitrary position information at any time. A system for distributing position information comprises a database management server (1), a position information database (2), a map information database (3), a utilizer terminal (4), a user terminal (5), and the like which are configured over the Internet. The utilizer acquires a utilization number by accessing the database management server (1) through the utilizer terminal (4), sets position information corresponding to the utilization number in the position information database (2), and transmits the utilization number to the user. The user can acquire the position information from the position information database (2) by accessing the database management server (1) through the user terminal (5) and searching the position information database (2) using the utilization number.

## Description

### TECHNICAL FIELD OF THE INVENTION

The present invention relates to a technique for distributing position information, particularly to a technique effective to apply to a content service distributing position information or to an apparatus for displaying position information as a position information database service for distributing by using the Internet.

### BACKGROUND OF THE INVENTION

Conventionally, as a technique for distributing position information, for example, a Web service on the Internet includes a map site on the Internet, a car navigation system, a map information service by a portable terminal, and the like. The map site is a technique for utilizing desired information by searching a target site on the Internet. The car navigation system is a technique for using information stored in a storage medium (generally, CD-ROM, DVD-ROM. or the like). The map information service is a technique for utilizing a desired information service by connecting from a portable terminal to a target service provider.

### DISCLOSURE OF THE INVENTION

In the Web service over the Internet as described above, position information and map information are managed on the same database. Further, since information in different map sites is recognized as different information, there is no choice but to utilize a specific site in order to acquire or publicly notify the position information. In addition, in the car navigation system, information at the timing when the storage medium is created as the source of information is used so that freshness of the position information cannot be prevented from being deteriorated with a lapse of time from the time point when the storage is created.

The present inventor devised that the position information can be shared irrespective of the terminal or the environment by managing the conventional position information database over the Internet so that a user can acquire the shared position information without taking account of the environment or the terminal. In addition, with respect to the freshness of the position information, it is noted not only that it is possible to arbitrarily reflect the latest information depending on the updating timing of data but also that it is possible to set not only fixed position information but also arbitrary position information at any time.

It is an object of the present invention to provide a method for distributing position information in which position information is shared over the Internet, a user can acquire the shared position information without taking account of the environment or the terminal and arbitrarily reflect the latest information, and a utilizer can set arbitrary position information at any time.

In order to achieve the above object, the present invention realizes the method for distributing position information capable of sharing the position information irrespective of the terminal or the environment by managing the position information database over the Internet.

In other words, the method for distributing position information according to the present invention is applied to a method for distributing position information using the Internet capable of distributing the position information by sharing a database provided on the Internet, and has a step where a utilizer acquires a utilization number for searching a database and sets position information corresponding to the utilization number in the database, a step where the utilizer transmits the utilization number to a user, and a step where the user searches the database using the utilization number and acquires the position information set by the utilizer from the database.

In the method for distributing position information, when the utilizer sets the position information corresponding to the utilization number in the database, it is possible to update and set arbitrary position information for the same utilization number at any time.

Further, in the method for distributing position information, when the utilizer transmits the utilization number to the user, the utilizer transmits the same utilization number to a plurality of users so that a plurality of users can acquire the position information set by the utilizer.

Further, in the method for distributing position information, when the user searches the database using the utilization number, the environment of the user terminal is added to the utilization number as attribute information so that it is possible to search the information corresponding to the attribute information from the database. In the case of this searching, the user can select whether to acquire only the position information or both the position information and the map information.

Furthermore, in the method for distributing position information, the utilization number may be a mobile phone number, a telephone number, a postcode, or a specific number. Further, the position information may be the latitude and longitude information.

Therefore, according to the method for distributing position information of the present invention, the position information is shared on the Internet, the user can acquire the shared position information without taking account of the environment or the terminal, and further the utilizer can arbitrarily reflect the latest information and set arbitrary position information at any time.

### BRIEF DESCRIPTION OF THE DRAWINGS

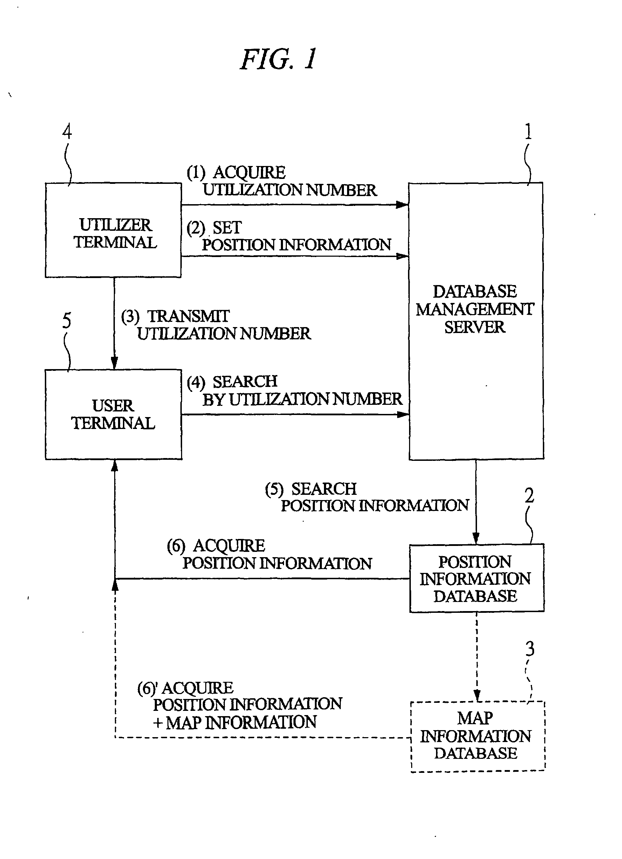

FIG. 1 shows a schematic configuration showing a system for realizing a method for distributing position information, and a flow showing a processing procedure of the method for distributing position information according to one embodiment of the present invention.

### BEST MODE FOR CARRYING OUT THE INVENTION

Hereinafter, one embodiment according to the present invention will be described in detail with reference to the drawing. FIG. 1 shows a schematic configuration showing a system for realizing a method for distributing position information, and a flow showing a processing procedure of the method for distributing position information according to the embodiment of the present invention.

At first, there will be described one example of the system configuration for realizing the method for distributing position information according to the present embodiment with reference to FIG. 1. The system for distributing position information according to the present embodiment comprises a database management server 1, a position information database 2, a map information database 3, a utilizer terminal 4, a user terminal 5, and the like which are configured over the Internet, in which access to the database management server 1 over the Internet is enabled from the utilizer terminal 4 and the user terminal 5.

The database management server 1 manages the position information database 2 and the map information database 3, can set position information for an access from the utilizer terminal 4, and distribute the position information of the position information database 2 and map information of the map information database 3 for an access from the user terminal 5. In this database management server 1, a utilization format of the database is unified and common transmission of the position information is managed.

The position information database 2 is a common database having the position information stored therein, and this position information is arbitrarily set by an access from the utilizer terminal 4 so as to be stored. This position information is, for example, information indicating the latitude and longitude of a certain place.

The map information database 3 is a database having the map information stored therein in which the map information of predetermined area previously prepared is stored therein. This map information is the information that can be displayed in various forms such as simplified displaying, enlarged displaying, bird's-eye displaying, and the like of the predetermined area.

The utilizer terminal 4 is a terminal having a function of accessing the Internet, a function of inputting the position information, and the like, and a mobile phone, PC (personal computer), PDA, and the like are used therefor.

The user terminal 5 is a terminal having a function of accessing the Internet, a function of displaying information including the position information and the map information, and a car navigation system, PC, PDA, a mobile phone, and the like are used therefor.

Next, one example of the processing procedure of the method for distributing position information will be described with respect to the operations of the present embodiment with reference to FIG. 1.
(1) An utilizer accesses the database management server 1 through the terminal 4, and acquires a utilization number for searching the position information database 2. A portable phone number, a telephone number, a zip code, or a specific number is utilized as this utilization number, and the environment of the terminal is additionally prepared as attribute information.
(2) The utilizer accesses the database management server 1 through the terminal 4, and sets the position information corresponding to the acquired utilization number in the position information database 2. At this time, the position information indicating a certain place set by the utilizer (information on the latitude and longitude) is stored in the position information database 2.
(3) The utilizer accesses the user terminal 5 through the terminal 4, and transmits the utilization number to a user. The user is not limited to an individual, so that it is possible to transmit the utilization number to a plurality of users who desire to utilize it. In this case, the common position information can be shared among a plurality of users.
(4) The user accesses the database management server 1 through the terminal 5, and searches the position information database 2 using the utilization number transmitted by the utilizer. At this time, while the environment of the user terminal 5 is added as the attribute information, the search in the position information database 2 is performed.
(5) The database management server 1 receives the utilization number and the attribute information. The user searches from the position information database 2 the information corresponding to the environment of the user terminal 5, and returns to the terminal 5 the position information (information on the latitude and longitude) for display. At this time, a determination is made as to whether the map information is transmitted along with the position information or only the position information is transmitted. When the map information is required, the map information is additionally returned from the map information database 3.
(6) The user acquires the position information set by the utilizer from the position information database 2. For example, when the map information database is incorporated in the user terminal 5 like a car navigation system, an image in which the position information is added to the incorporated map information is displayed so that the certain place set by the utilizer can be recognized and confirmed.

When the user terminal 5 including a mobile phone does not have the map information in the Internet display environment, it is possible to recognize and confirm the certain place set by the utilizer by acquiring and displaying the information of the certain place ((6)': shown with dotted lines) by setting a match between the position information of the position information database 2 and the map information of the map information database 3 over the Internet and.

Further, when another certain place is set, similarly to the above (2), the utilizer accesses the database management server 1 through the terminal 4, and uses the same utilization number previously acquired and then set a position information on another certain place in the position information database 2 for this utilization number. In other words, when the utilizer sets the position information, it is possible to update and set arbitrary position information corresponding to the same utilization number at any time.

Thus, according to the system for distributing position information of the present embodiment, the user is to have the position information database 2 managed by the database management server 1 over the Internet so that the user can share the position information irrespective of the environment of the utilizer terminal 4 or the user terminal 5. Therefore, the user can acquire the shared position information without taking account of the environment or the terminal.

In addition, freshness of the position information stored in the position information database 2 can arbitrarily reflect the latest information depending on the update timing of the data, and further the utilizer can update and set not only fixed position information but also arbitrary position information at any time.

Hereinbefore, one example of the invention made by the present inventor is specifically described on the basis of the embodiment, but the present invention is not limited to the above embodiment and can be variously modified without departing from the spirit of the invention.

For example, the system for distributing position information according to the present invention is not limited to the above embodiment and can be variously modified as long as respective means can realize respective functions, such as means by which a utilizer acquires a utilization number, means by which the utilizer sets position information in a database, means by which the utilizer transmits the utilization number to a user, means by which the user searches the database using the utilization number, means by which the user acquires the position information from the database, and the like.

Further, with respect to the terminal of the utilizer or user, only if the utilizer terminal has a function of accessing the Internet or a function of inputting the position information, and the user terminal has a function of accessing the Internet or a function of displaying information including the position information and the map information, the terminal can be widely applied to other terminals.

Furthermore, as a specific example, the user can acquire the position information on the certain place set by the utilizer in the database in a following manner.
(1) [1] The utilizer acquires the right of utilizing the utilization number, [2] a manager (database management server) issues a utilization permission and a password for utilizing the utilization number, [3] the utilizer sets the position information on the Web site or with voice, [4] the manager performs authentication of the utilization number and the password, and registers and sets the position information in the position information database as data corresponding to the utilization number. Accordingly, the utilizer performs registration confirming, and notifies and transmits the utilization number to the user in any manner so that the user can acquire the position information in a predetermined manner. In this form, the utilizer acquires the right of utilizing the utilization number so that the manager makes profits.
(2) [1] The utilizer searches a destination point from a specific map service, [2] extracts the position information on the Web site, and registers the position information in a predetermined manner, [3] the manager issues the password in order to prevent "pretender", [4] the utilizer calls the database management server and confirms the phone number by CTI and collates the password, and reflects on the position information database by matching. Thereby, the utilizer performs registration confirming, and notifies and transmits the utilization number to the user in any manner so that the user can acquire the position information in a predetermined manner. In this form, every time the user acquires the position information, the manager makes profits.

### INDUSTRIAL APPLICABILITY

As described above, the method for distributing position information according to the present invention is useful for an apparatus for displaying a content service distributing position information or position information as a position information database service for distributing by using the Internet, and can be widely applied to a method for distributing position information in which the position information can be shared irrespective of the terminal or the environment by managing, in particular, the position information database over the Internet.

## Claims

1. A method for distributing position information, using the Internet on which a database is provided and enabling to distribute the position information by sharing the database, comprising:
a step where a utilizer acquires a utilization number for searching the database and sets position information corresponding to the utilization number in the database;
a step where the utilizer transmits the utilization number to a user; and
a step where the user searches the database using the utilization number, and acquires the position information set by the utilizer from the database.

2. A method for distributing position information according to claim 1, wherein, when the utilizer sets the position information corresponding to the utilization number in the database, arbitrary position information can be updated and set for the same utilization number at any time.

3. A method for distributing position information according to claim 1, wherein, when the utilizer transmits the utilization number to the user, the utilizer transmits the same utilization number to a plurality of users so that the plurality of users can acquire the position information set by the utilizer.

4. A method for distributing position information according to claim 1, wherein, when the user searches the database using the utilization number, the environment of a terminal of the user is added to the utilization number as attribute information, and the user searches information corresponding to the attribute information from the database.

5. A method for distributing position information according to claim 4, wherein, when the user searches the information corresponding to the attribute information from the database, the user can select whether to acquire only the position information or both the position information and map information.

6. A method for distributing position information according to claim 1, wherein the utilization number is a mobile phone number, a telephone number, a postcode, or a specific number.

7. A method for distributing position information according to claim 1, wherein the position information is the latitude and longitude information.
